# EUROPEAN PATENT APPLICATION

(11) **EP 1 970 982 A1**
(43) Date of publication of application: **17.09.2008**
(21) Application number: 06811119.4
(22) Date of filing: 03.10.2006
(51) Int. Cl.: H01M 2/10, H01M 2/02

(54) **BATTERY PACK**

(30) Priority: 03.10.2005 JP 2005290342; 03.10.2005 JP 2005290339
(71) Applicant: Densei-Lambda K.K., Tokyo 141-0022 (JP)
(72) Inventor: NAKAZAWA, Hiroshi c/o Densei-Lambda Kabushiki Kaisha, Tokyo 1410022 (JP)
(74) Representative: Kayser, Martin
(86) International application number: PCT/JP2006/319771
(87) International publication number: WO 2007/043392

(57) **Abstract**

A battery cell 101 has an internal structure where after building up an assembled unit by stacking positive-and negative-electrode materials 110, 111 and a separator 112 in some layers, the assembled units, together with an electrolyte, are sealed with aluminum laminates 114, 114. The battery pack 1 comprises cell assemblies 102 formed by stacking one on top of another in a plurality of the battery cells 101. A deformation-preventive plate 2 is inserted into a portion between each of the battery cells 101 stacked. The cell assemblies 102 inserted by the deformation-preventive plates 2 between each of the battery cells are pressed by cell assembly pressing plates 3, 3 from the upper and lower sides of the battery assemblies. The cell assemblies 102 are pressed by the cell assembly pressing plates 3, 3 to be subjected to some degree of pressure. Hence, the cell assemblies 102 expand not largely to be maintained as an approximately the same form as that at a normal time.

## Description

### TECHNICAL FIELD

The present invention relates to a battery pack such as that of a lithium-ion secondary battery or the like which is made available for an electric power supply for a wide variety of electronic equipment.

### BACKGROUND ART

In general, in an uninterruptible power supply unit requiring a backup electric power supply, while an input voltage from a commercial alternating-current power supply is being normally generated, a direct-current or alternating voltage which is required for load- is supplied from a master electric power supply of an electric source body acting as electronic equipment to a load with a secondary battery being charged via the master electric power supply. While, when the input voltage has dropped markedly or power failure has occurred, a secondary battery acting as a backup electric power supply supplies electric power from the master electric power supply to the load without interruption. The secondary battery employed here has been conventionally a lead storage battery and the key reason for this is that the lead storage battery is inexpensive and besides its charging and discharging behaviors are easy to manage.

The uninterruptible power supply unit mounted with the lead storage battery is required to ensure a large battery storage space and besides is extremely heavy and further has a variety of environmental problems attributable to the use of lead. To eliminate such drawbacks, patent document 1, e.g., has proposed an uninterruptible power supply unit in which the lithium-ion secondary battery is employed as a backup electric power supply in place of the lead storage battery. The lithium-ion secondary battery in this case comprises battery modules (battery packs) built up by series-connecting a plurality of battery cells and incorporates a battery protection circuit for preventing overcharge and over discharge.

Further, in another patent document 2, a package-like secondary battery is disclosed comprising over discharge and overcharge protection circuits and incorporates the lithium-ion secondary battery

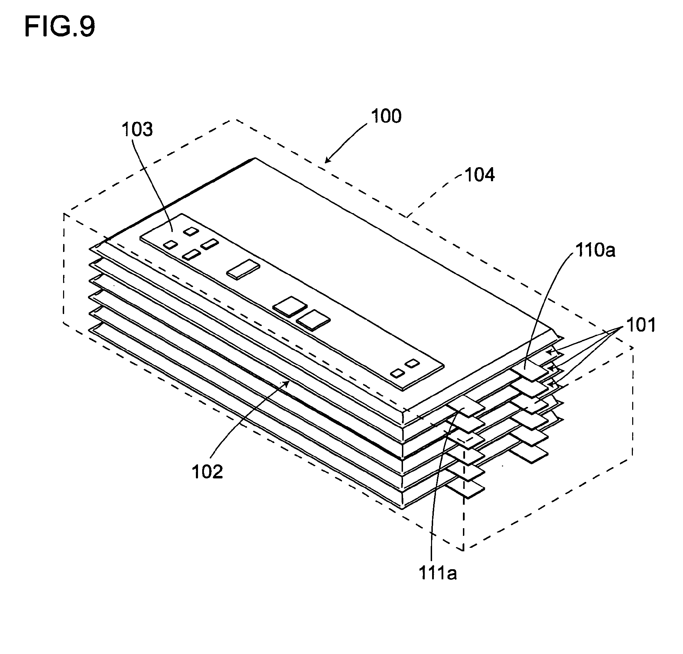

Heretofore, the lead storage battery has been generally used as a secondary battery Recently, however, the lithium-ion battery has been extensively used which has remarkably high electric power density and can be downsized. FIG. 9 represents the lithium-ion battery pack like this. The lithium-ion battery pack has typically a cylindrical type and a square type. Here, the square type is shown. In the drawing, the battery pack 100 is in the form of assembled cells 102, acting as a battery stack, which are formed by vertically stacking a plurality of flat-plate-like battery cells 101 electrically series-connected with one another. On the top of the assembled cells 102, a battery protection circuit 103 is mounted and is housed in a pack case 104.

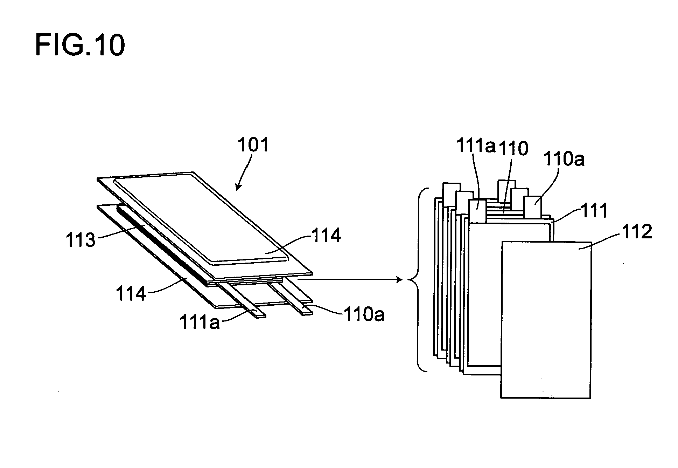

In FIG. 10 is shown an internal structure of the laminate-type which is one form of the lithium-ion battery The battery cell 101 acting as the laminate-type lithium-ion battery has a structure where separators 112 comprising a minutely porous film or the like made from polyethylene or polypropylene for the purpose of insulation are inserted into portions between a positive-electrode material 110 made from e.g., lithium cobaltate (LiCoO₂) lithium manganate (LiMnO₂ or the like and a negative-electrode material made from e.g., graphite or the like, and further after stacking this assembled unit in some layers, the stacked structure 113, together with an electrolyte, are sealed with aluminum laminates 114, 114. The positive- and negative-electrode materials are formed with positive and negative electrodes, respectively and protrude from stuck portions of the aluminum laminates 114, 114 outward.
Patent Document 1: Japanese unexamined patent application publication No. 2002-58170
Patent Document 2: Japanese registered patent publication No. 2861879
Patent Document 3: Japanese unexamined patent application publication No. 11-283599
Patent Document 4: Japanese registered patent publication No. 2861879

### DISCLOSURE OF INVENTION

### Problem to be solved by the invention

In the case of a lithium-ion battery with a laminate external package such as the battery cell 101, when a voltage equal to or more than a rated voltage has been applied to the battery cells 101 due to overcharge or the like, gases are generated inside the aluminum laminates 114, 114 by dissolution of an electrolyte and then the aluminum laminates 114, 114 itself expand to cause the gases to enter portions between the stacked layers of the positive-electrode material 110 or the negative-electrode material 111 and the separator 112, so that the stacked structure collapses to eventually be deformed. If this situation continues, thermally stuck portions of the aluminum laminates 114, 114 are unstuck and thereby the electrolyte and evaporated gases leak to the outside and then internal temperatures of the battery cells are gradually increased to further deform the internal stacked structure. Then, when an inside of the battery cells 101 reaches a dissolution temperature (breaking temperature) of the separator 112, the temperature on a surface of the separator 112 becomes uneven due to the deformation of the inside of the battery cells 101, resulting in a local abrupt temperature rise. As a result, the separator 112 originally aimed at insulating a portion between the positive- and negative-electrode materials 110, 111 is partially dissolved on its surface to fail and then short-circuiting occurs between the positive- and negative-electrode materials 110, 111, thus leading to the possibility to initiate short-circuiting between the positive- and negative-electrode materials 110, 111 to cause thermal hazard, resulting in smoking of the battery cells 101.

Flammable internal gases generated inside the battery cells 101 are, e.g., evaporated gases (diethyl carbonate, ethylene carbonate) generated from the electrolyte due to overvoltage and are CH₄, C₂H₄, C₂H₆ or the like. Then, these internal gases are generated inside the battery in overcharging or the like of the battery cells 101 to cause the aluminum laminates 114, 114 to expand. On this occasion, as is disclosed in the patent document 3, in cases where an explosion-proof valve is provided to act as a discharge portion which specifies a discharging direction of the internal gases, when internal pressure of the battery has risen beyond a given value, the internal gases are effused from the explosion-proof valve to an outside of the battery, thus performing gas purging to prevent explosion of the gases.

As just described, the generation of the internal gases due to overcharging or the like in the battery cell 101 might lead to smoking and kindling in the worst scenario. Consequently, as measures to solve such safety hazard, a protection circuit such as a battery protection circuit 103 (see the patent document 4, for example) for preventing the smoking and kindling of the battery is normally mounted inside that battery pack. In the patent document 4, there are provided an over discharge protection circuit and an overcharging protection circuit to block charging, discharging or the like relative to a secondary battery at the time of overcharging or over discharging, thereby preventing the smoking and kindling of the battery. In general, when actually mounting the battery cell 101 inside the battery pack, the protection circuit is laid on the uppermost part of the battery pack built by stacking, as stated above, one on top of another in a plurality of the battery cells 101.

Even if the protection circuit is provided, there are still some cases in which the protection circuit might fail from any cause. In that case, whilst the internal gases are generated due to over charging or the like, the foregoing explosion-proof valve is provided merely to prevent the explosion. Therefore, once the thermal hazard temperature has been reached, the flammable internal gases are discharged so that they are prone to give rise to the smoking and the kindling due to internal short-circuiting. Accordingly, mechanical safety measures have been long awaited which can ensure safety without fail at an early stage prior to leading to the thermal hazard.

Heretofore, lithium-ion batteries with high capacity have been not yet a commercial reality and therefore the safety in overcharging was so considered as to depend only upon an electric protection circuit such as the battery protection circuit 103. As a result, safety measures at the time of operation failure of the protection circuit have not been studied under the present situation. As a mechanical solution, a mechanical design has been made at such a level that the cell assembly 102 is simply put in the pack case 104 to take measures against mechanical vibrations and impacts which are caused by external factors. According to the pack case 104 (mechanism) thus designed in view of the external factors only, the pack case 104 itself is robust, yet it is only at such a level that there exist gaps between the inside cell assembly 102 (or a single battery cell 101) and the pack case 104, or the cell assembly 102 is fixed to the pack case in order for the cell assembly 102 itself not to move by the vibrations and the impacts. Hence, the battery cell 101 (the cell assembly102) is easily deformed in overcharging. In the pack case 104 designed in terms of only such external factors, expansion and deformation may occur due to over charging to cause the thermal hazard due to the inside short-circuiting and then internal force resulting from an internal pressure rise and the deformation (expansion) of the cell assembly 102 is developed inside the pack case 104. At this time, high airtightness of the pack case 104 is likely to allow the pack case 104 to lead to the explosion and deformation thereof.

Further, in lithium-ion batteries, since the safety is generally seen as a problem, battery and protection circuit are taken into account as a pair, so that the battery and the protection circuit are normally arranged adjacently to each other. In other words, whilst the cell assembly 102 and the battery protection circuit 103, as a battery unit, are housed in the pack case 104, the cell assembly 102 is fixed inside the pack case 104 to such a fixing degree that the cell assembly 102 may be made immovable against the possible external factors. In this case, when the battery cell 101 is deformed to be subjected to the thermal hazard by overcharging, a considerable amount of smoke is generated inside the pack case 104. Hence, when the battery protection circuit 103 is adjacent to the battery cell 101, short-circuiting also is considered to be likely to occur between different-polarity cell terminals due to the deformations of the cell terminals, i.e., between the positive and negative electrodes 110a, 111a.

Accordingly, with the view to the forgoing problems, it is a first object of the present invention to provide a battery pack in which the deformation of a cell due to overcharging or the like is prevented and mechanical safety measures are taken.

Further, it is a second object of the present invention to provide a battery pack in which a battery is made to fail at an early stage of overvoltage to ensure safety.

### Means for solving the problem

There is provided a battery pack equipped with an assembled battery body made up by stacking a plurality of battery bodies which are built by inserting an insulating separator into a portion between positive- and negative-electrode materials to form an assembled unit and then sealing, by a laminate outer package, a stacked structure produced by stacking this assembled unit, together with an electrolyte. In the battery pack, a hard deformation-preventive member is inserted into the battery bodies of the assembled battery body and there is provided a deformation-preventive means which presses the whole of the assembled battery body to prevent the deformation of each battery body

By this means, the expansion of the battery cell is mechanically curbed by the deformation-preventive member and the deformation-preventive means even if electrical protection fails. Hence, even if gases are generated inside the battery body due to dissolution of the electrolyte, the stacked structure inside each battery body is not collapsed. If no deformation occurs in the stacked structure, a current of the battery body is decreased on account of an impedance property of the separator before a separator temperature reaches the melting point to shut down the temperature rise of the battery body, thus leading to no thermal hazard.

Further, in the battery pack according to the present invention, the deformation-preventive means is a case into which the whole of the assembled battery body is pressed.

By this means, the expansion of the battery body can be readily prevented using the case for housing the assembled battery body.

Furthermore, in the battery pack according to the present invention, the deformation-preventive member and/or the deformation-preventive means employ an exoergic member excellent in thermal conduction.

By this means, heat of each battery body building up the assembled battery body is rapidly dissipated by the deformation-preventive member and/or the deformation-preventive means which are interposed between each battery body

Moreover, in the battery pack according to the present invention, the deformation-preventive member employs a thermal insulating member with thermal insulation performance.

By this means, the battery body and each of units can be independently insulated. Hence, a temperature rise can be prevented from spreading to other portions.

Further, in the battery pack according to the present invention, in the battery body, there is provided an electrolyte discharge means in which by internal pressure arisen from the dissolved gases of the electrolyte generated by a given overvoltage in overcharging, the sealing of the laminate external package are broken open to discharge the electrolyte outward.

By this means, utilizing the internal pressure arisen from the dissolved gases resulting from the dissolution of the electrolyte due to a given overvoltage, the sealing of laminate external package is broken open at an early stage to discharge the electrolyte to an outside of a secondary battery. As a result, an amount of the electrolyte inside the secondary battery is decreased. Hence, the secondary battery becomes to have impedance to act as a resistor, thus curbing a temperature rise resulting from inside self-heating.

### Effects of the invention

According to the present invention, a battery pack can be provided in which deformation of a battery body due to overvoltage or the like is prevented and a mechanical safety measure is taken.

Further, according to the present invention, a mechanical safety measure can be practiced utilizing the existing system.

Furthermore, according to the present invention, a secondary battery can be provided in which the battery is made to fail at an early stage of overvoltage

### BRIEF DESCRIPTION OF THE DRAWING

FIG. 1 is a longitudinal cross-sectional view illustrating substantial parts of a battery pack in a first embodiment of the present invention.
FIG. 2 is a longitudinal cross-sectional view illustrating substantial parts of a battery pack in a second embodiment of the present invention.
FIG. 3 is a longitudinal cross-sectional view illustrating substantial parts of a modification example of a battery pack in the same.
FIG. 4 is a longitudinal cross-sectional view substantial parts of another modification example of a battery pack in the same,
FIG. 5 is a partially-cutaway plain view illustrating characterizing portions of a first modification of a secondary battery in each of the embodiments of the present invention.
FIG. 6 is a partially-cutaway plain view illustrating characterizing portions of a second modification of a secondary battery in each of the embodiments of the present invention.
FIG. 7 is a partially-cutaway plain view illustrating characterizing portions of a third modification of a secondary battery in each of the embodiments of the present invention.
FIG. 8 is a partially-cutaway plain view illustrating characterizing portions of a fourth modification of a secondary battery in each of the embodiments of the present invention.
FIG. 9 is a perspective view illustrating an internal structure of a battery pack in the conventional example.
FIG. 10 is an exploded perspective view illustrating an internal structure of a lithium-ion battery in the same.

### Explanation of Reference Numerals

1. Battery pack
2. Deformation-preventive plate (Deformation-preventive member)
3. Cell assembly pressing plate (Deformation-preventive means)
   10, 20, 30 Battery pack
   11, 21, 31 Case (Deformation-preventive means)
   41, 51, 61, 71 Battery cell
   43a, 43b, 43c, 43d Narrow-width thermal adhesion portion (Electrolyte discharge means)
   101 Battery cell (Battery body)
   102 Cell assembly
   110 Positive-electrode material
   111 Negative-electrode material
   112 Separator
   113 Stacked structure
   114 Aluminum laminate (Laminate external package)

### BEST MODE FOR CARRYING OUT THE INVENTION

The following is detailed descriptions of each preferred embodiment of a battery pack according to the present invention with reference to the appended drawings. In addition, the same reference numerals are used for parts the same as in each embodiment and descriptions for common parts are omitted to avoid overlapping in the description as much as possible.

### (Embodiment 1)

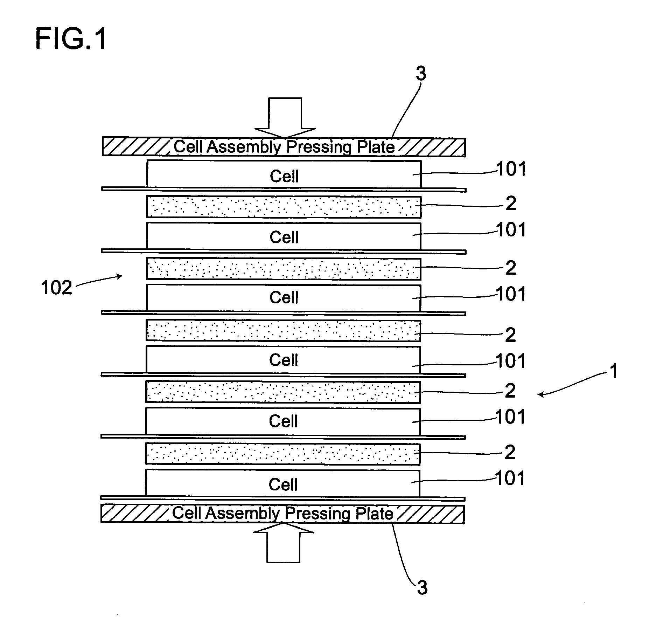

FIG. 1 is a cross-sectional view of substantial parts representing a structure of a battery pack in the present first embodiment. In a battery cell 101 acting as a battery body building up a battery pack 1, the same battery as a lithium-ion battery shown in the conventional example is employed. That is, an internal portion of the battery cell 101 is structured so that after making up a stacked structure 113 by stacking a positive-electrode material 110, a negative-electrode material 111 and a separator 112 in some layers, the stacked structure 113, together with an electrolyte, is sealed with aluminum laminates 114, 114. In the present embodiment, the battery pack 1 comprises cell assemblies 102 which act as an assembled battery body formed by stacking one on top of another in a plurality of electrically-series-connected flat-plate-like battery cells so as to attain a given voltage and capacity In addition to this structure in the present embodiment, however, a deformation-preventive plate 2, acting as a deformation-preventive member, is sandwiched between each of stacked battery cells 101.

The deformation-preventive plate 2 is to prevent the deformation of the battery cell 101 and therefore is required to have at least such a size as to cover oppositely the whole surface of the separator 112 for the battery cell 101. Besides, any materials and any thickness of the deformation-preventive plate 2 may be available if they have such hardness as not to cause deformation of the deformation-preventive plate 2 by expansive force of the battery cell 101 at the time of overcharging or the like as in the case of employing metals such as aluminum, iron, copper or the like and resin.

The cell assemblies 102 with the deformation-preventive plate 2 inserted into a portion between each of the battery cells 101 are housed in a boxy pack case 104 with the cell assembly 102 pressed from the upside and the downside by cell assembly pressing plates 3, 3. Specifically, the cell assemblies 102 are sandwiched by the cell assembly pressing plates 3, 3 and then are firmly bundled using fastening members (not shown) such as adhesive tapes, binding bands or the like to be housed in the pack case 104. This cell assembly pressing plates 3 is formed from a hard member as with the deformation-preventive plate 2 and is required to have at least such a size as to cover oppositely the whole surface of the separator 112 of the battery cell 101 as with the deformation-preventive plate 2. In the present embodiment, the cell assembly pressing plate 3 is one size larger than that of the deformation-preventive plate 2 so as to permit the whole of the cell assemblies 102 to be certainly pressed. The pressing strength to the cell assemblies 102 must be in the order of not damaging a life span and reliability of a property of the battery cell 101 (a property as a battery). Besides, the pressing method is desirably to press uniformly surfaces of the cell assemblies 102. If not uniformly pressing, there is possibility that the positive- and negative-electrode materials 110a, 111a and the separator 112 which are stacked inside the battery cell 101 are partially degraded to accelerate the degradation in a life span of the battery cell 101. Inversely, in the case of uniformly pressing the surfaces of the battery cells 101, the partial degradation of the battery cells 101 due to partially nonuniform pressing strength on the surfaces is hard to occur in charging and discharging and hence the life span of the battery cells 101 can be improved.

In the battery cell 101 of the present embodiment, a laminate external package is employed and hence cares must be taken for burrs or the like not to remain in such members abutting against the battery cell 101 as the deformation-preventive plate 2 and the cell assembly pressing plate 3 or the like in order not to scratch the aluminum laminates 114, 114. As the measures for this harm, it can be considered that an insulating sheet is inserted into portions between the battery cells 101 and the members or insulating coating are applied to and tapes are adhered to the members themselves such as the deformation-preventive plate 2 and the cell assembly pressing plate 3.

Next is a description of behavior of the deformation-preventive plate 2 and the cell assembly pressing plate 3 at the time of charging and discharging. The cell assembles 102 are pressed by the cell assembly pressing plates 3, 3 to be subjected to a certain degree of pressure and thereby each battery cell 101 building up the cell assemblies 102 is constrained between the cell assembly pressing plates 3, 3 or the deformation-preventive plates 2. Hence, each battery cell 101 expands little or nothing even in overcharging or the like to be held in an approximately the same form as that in a normal condition. At that time, there is no room inside the battery cells 101 for gases to enter layers between the positive- or negative-electrode materials 110, 111 and the separator 112 not to collapse the stacked structure. Accordingly, there is no temperature nonuniformity on the surfaces of the separator 112, in other words, the separator 112 is uniformly heated over the whole surfaces thereof, resulting in a slow rise in temperature. The material generally employed for the separator 112 has a property where impedance is increased in proportion to a temperature rise. Hence, if there occurs no deformation in the stacked structure due to the property of the separator 112, the impedance between the electrodes is increased due to contraction of the separator 112 before the temperature of the separator 112 reaches its melting temperature and then a current of the battery cell 101 is decreased before melting and inside short-circuiting occur to shut down the temperature rise of the battery cell 101, leading to no thermal hazard. Further, mutual contact is curbed between different-polarity electrodes, the positive and negative electrodes 110a, 111a due the deformation of the battery cell 101. Thus, by preventing the deformation of the battery cell 101 due to overcharging or the like and utilizing a variation in impedance caused by the temperature of the separator 112, safety can be mechanically ensured at an early stage before the thermal hazard is reached.

For the purpose of curbing the temperature rise of the battery cell 101, it is desirable that an exoergic member with a quality, thickness and a form which have an excellent thermal conduction is employed in the deformation-preventive plate 2 and the cell assembly pressing plates 3, 3. When employing the exoergic member in these plates, heat of each battery cell 101 building up the cell assembly 102 is rapidly dissipated by the deformation-preventive plate 2 interposed between each of the battery cells 101. Accordingly, even if each battery cell 101 dissipates heat in charging and discharging, the heat is rapidly dissipated to allow each battery cell 101 to be prevented from reaching high temperature. Especially, the cell assembly 102 is built up by stacking a plurality of the battery cells 101 and therefore the heat is prone to remain in the central portion of the cell assembly 102. However, by providing the deformation-preventive plate 2 excellent in the exoergic property between each of the battery cells 101, the heat of the battery cells 101 is rapidly dissipated and hence the heat doesn't remain in the central portion of the cell assembly 102 to alleviate the temperature rise of the battery cells 101, enabling the separator 112 to shut down the heat more certainly.

As described above in the present embodiment, there is provided a battery pack 1 equipped with the cell assembly 102 acting as the assembled battery body made up by stacking a plurality of battery bodies which are built, by inserting a separator 112 for the purpose of insulation into a portion between positive- and negative-electrode materials 110, 111 to form an assembled unit and then sealing, by aluminum laminates 114, 114, acting as a laminate external package, a stacked structure 113 produced by stacking this assembled unit, together with the electrolyte. In the battery pack 1, the deformation-preventive plate 2 acting as the hard deformation-preventive member is inserted into the portion between the battery cells 101 of the cell assembly 112 and the cell assembly pressing plates 3, 3 are provided which press the whole of the cell assembly 102 to act as the deformation-preventive means for preventing the deformation of the battery cells 101.

Consequently, the expansion of the battery cell 101 can be mechanically curbed by the deformation-preventive plate 2 and the cell assembly pressing plates 3, 3 even if the electric protection fails. Hence, even if the gases is generated inside the battery cell 101 due to the dissolution of the electrolyte in overcharging or the like, the stacked structure inside each battery cell 101 is not collapsed. If not generating the deformation of the stacked structure, the current of the battery cell 101 is decreased before the temperature of the separator 112 reaches its melting temperature to shut down the temperature rise of the battery cell 101, leading to no thermal hazard. Due to the scheme described above, the battery pack can be provided in which the deformation of the battery cell 101 is prevented and a mechanical safety measure is provided.

Further in the first embodiment, the deformation-preventive plate 2 and/or the cell assembly pressing plates 3, 3 are formed by employing the exoergic member excellent in thermal conduction.

Consequently, the heat of each battery cell 101 building up the cell assembly 102 can be rapidly dissipated by the deformation-preventive plate 2 and/or the cell assembly pressing plates 3, 3 which are interposed between each of the battery cells 101. Accordingly, even if each battery cell 101 dissipates the heat in charging and discharging, the heat can be rapidly dissipated, thus permitting each battery cell 101 to be prevented from reaching high temperature.

### (Embodiment 2)

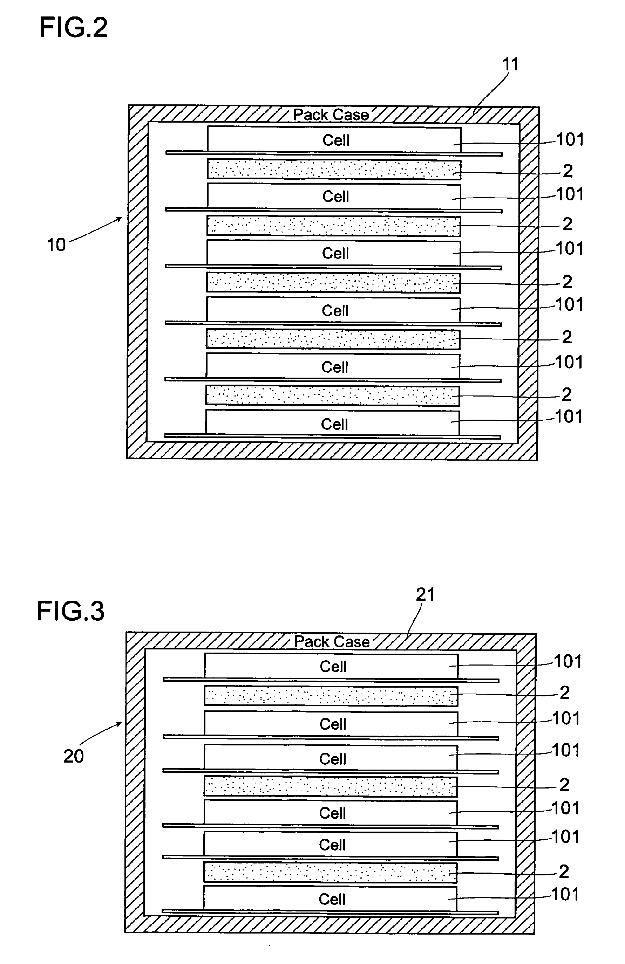

FIG. 2 is a cross-sectional view of substantial parts representing a structure of a battery pack in the present second embodiment. An essential structure of a battery cell 10 is approximately the same as that of the battery pack 1 shown in the first embodiment. That is, a cell assembly 102 makes up a battery stack formed by stacking one on top of another in a plurality of electrically-series-connected flat-plate-like battery cells so as to attain a given voltage and capacity. The deformation-preventive plate 2 is, however, inserted into a portion between each of stacked battery cells 101

In the present second embodiment, a boxy pack case 11 as a deformation-preventive means is employed in place of the cell assembly pressing plates 3, 3. The boxy pack case 11 is formed in a somewhat lower shape than the cell assemblies 102 into which the deformation-preventive plates 2 are inserted. When housing the cell assembly 102 inside the boxy pack case 11, the cell assembly 102 is pressed into the pack case 11. As a result, the cell assembly 102 is pressed by inner surfaces of the pack case 11 and a certain degree of pressure is applied to the cell assembly 102 to thereby restrain each battery cell 101 from expanding.

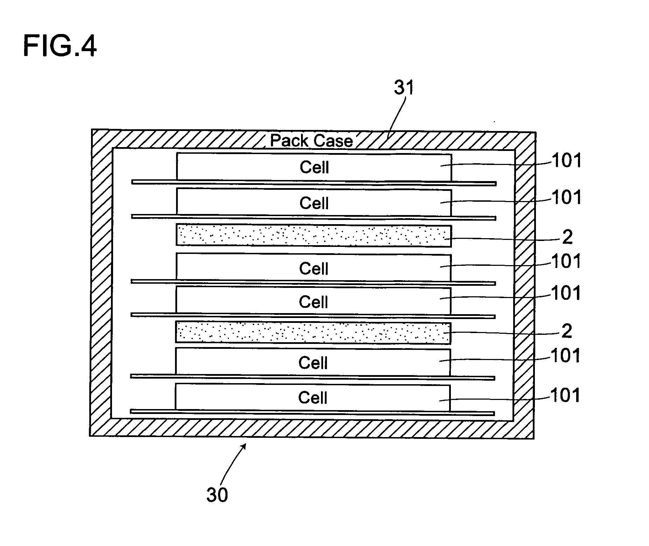

As modifications of the present embodiment, battery packs 20, 30 are shown in FIG. 3, 4. In the battery pack 20, without inserting the deformation-preventive plate 2 into an interlaminar portion of each battery cell 101, the cell assembly 102 in which the deformation-preventive plate 2 is inserted into every one battery cell 101 or every two battery cells 101 is pressed into the boxy pack case 21. In the battery pack 20 shown in FIG. 3, two battery cells 101 are sandwiched between the deformation-preventive plates 2, 2 and one battery cell 101 is sandwiched between the inner surface of the pack case 21 and the deformation-preventive plate 2. On the contrary, in the battery pack 30 shown in FIG. 4, the cell assembly 102 in which the deformation-preventive plate 2 is inserted into every two battery cells 101 is pressed into the boxy pack case 31. Accordingly, the pack cases 21, 31 must be designed so that the cell assemblies 102 can be pressed thereinto.

In the cell assembly 102 or the battery cells located at the top and bottom of the cell assembles 102, the separator can certainly shut down a temperature rise by alleviating the temperature rise. Hence, it is desirable that the pack case 11, 21, 31 for preventing the cell assembly itself from being deformed also have the quality of material, thickness and a form which are excellent in thermal conduction. As the modification examples shown in FIGs. 3, 4, the deformation-preventive plate 2 inserted into the cell assembly 102 is not inserted into the portion between each of the battery cells 101 but may be inserted into every arbitrary number of cells, such as every two, three or more than three cells. In the case of prioritizing an effect of alleviating the temperature rise of the battery cell, however, the deformation-preventive plate 2 is desirably inserted into each battery cell 101.

As stated above, in the battery pack 10, 20, 30 in the present embodiment, each of the pack cases 11, 21, 31 into which the whole of the cell assemblies are inserted plays a role as the deformation-preventive means.

Consequently, utilizing the pack cases 11, 21, 31 which house the cell assemblies, the battery cell 101 can be easily prevented from expanding. Accordingly, by utilizing an existing structure, a mechanical safety measure can be taken.

Further, in the present embodiment, the deformation-preventive plate 2 and/or the pack cases 11, 21, 31 are formed by using an exoergic member excellent in the thermal conduction.

Consequently, by the deformation-preventive plate 2 which are interposed between each of the battery cells 101 and/or the pack cases 11, 21, 31, the heat of the battery cells 101 building up the cell assemblies 102 can be rapidly dissipated. Accordingly, even if each of the battery cells 101 dissipates the heat in charging and discharging, the heat is rapidly dissipated, thereby permitting each of the battery cells 101 to be prevented from reaching a high temperature.

Now, the following is a description of advantageous modifications of a single battery cell in each of the above embodiments. By applying the modifications to the battery cells 101 incorporated in the battery packs 1, 10, 20, 30, the safety can be further improved.

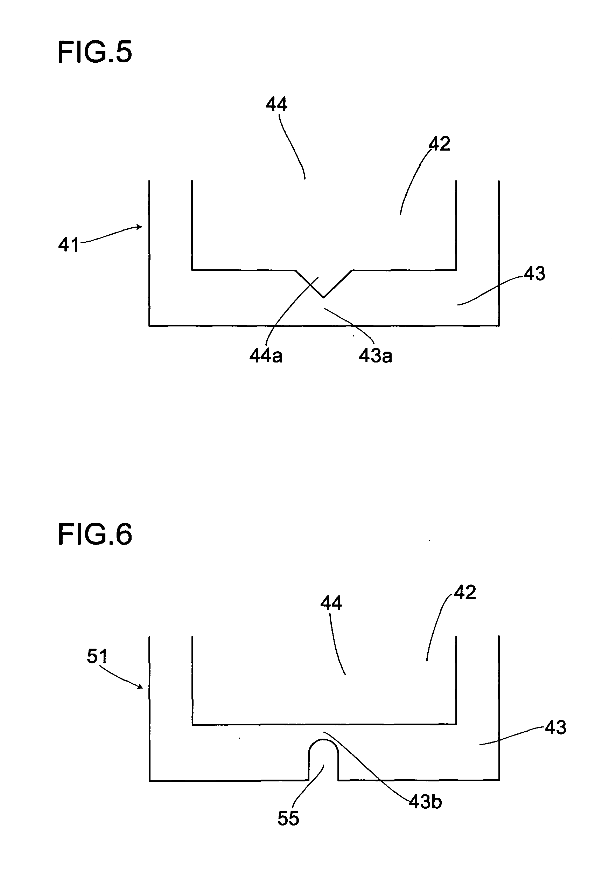

FIG. 5 is a partially-cutaway plain view showing one end of a secondary battery in a first modification. A battery cell 41 acting as a secondary battery employs the same structure as that of the battery cell 101 shown in the conventional example and each of the embodiments except for the external package. The battery cell 41 is internally so structured that after stacking the positive-and negative-electrode materials 110, 111 and the separator 112 in some layers to form the stacked structure 113, the stacked structure 113, together with an electrolyte, is sealed by aluminum laminates 42, 42.In addition, part shown in the figure indicates an end at a side where the positive electrode 110a and the negative electrode 111a are not protruded in the battery cell 41.

Edges of the aluminum laminates 42, 42 are formed from a thermal adhesion portion 43 adhered together with no space over their entire circumferences by thermal adhesion process, while an inside of the thermal adhesion portion 43 forms a pouched portion 44 not subjected to the thermal adhesion. In the pouched portion 44, the stacked structure 113 and the electrolyte are housed to be sealed. The thermal adhesion portion 43 is formed in a certain width from the edges of the aluminum laminates 42, 42. Only a central portion of the end at the side where the positive electrode 110a and the negative electrode 111a are not protruded is formed with a narrow-width adhesion portion 43a which is narrowed as compared to the other portions and acts as an electrolyte discharge means. The narrow-width adhesion portion 43a is formed by thermally adhering the aluminum laminates 42, 42 so that a triangle pouched portion 44a which communicates with the pouched portion 44 protrudes from a boundary line between the thermal adhesion portion 43 and the pouched portion 44 in a triangular-shaped manner. The narrow-width adhesion portion 43a is, i.e., structured by narrowing locally the width of the thermal adhesion portion 43 to protrude the pouched portion 44 to a side of the edges of the aluminum laminates 42, 42.

Next is a description of behavior in overvoltage and overcharging of the battery pack 41.

When an overvoltage has been applied from a battery charger (not shown) to the battery cell 41, the dissolution of the electrolyte inside the battery cell 41 is accelerated to generate heat, thus initiating a temperature rise of the battery cell 41. At the same time, dissolved gases are generated inside the battery cell 41 due to the dissolution of the electrolyte to cause expansion of the aluminum laminates 42, 42. Then, when pressure inside the battery cell 41 has risen to a value equal to or more than a given value, the sealing of the narrow-width adhesion portion 43a is broken to open. From the broken portion, the dissolved gases of the electrolyte and the electrolyte itself which are inside the battery cell 41 are leaked outward. The temperature rise inside the battery cell 41 occurs due to energy stored in the battery cell 41. Hence, by making the sealing of the laminates 42, 42 of the cell external package laminates 41, 41 open to discharge the electrolyte in liquid and evaporated gas states to the outside of the battery cell 41, the volume of the electrolyte inside the battery cell 41 is decreased and therefore the battery cell 41 becomes to have impedance to change into a resistor, thus permitting the temperature rise due to inside self-heating to be prevented.

Thus, in the battery cell 41, the mechanical safety measure is taken by providing a function to intentionally break open the laminates 42, 42 at an early stage of the overvoltage. This breaking open purposes the following. The dissolved gases are generated due to the dissolution of the electrolyte at an early stage (a slightly higher voltage level than the rated voltage) leading to the thermal hazard. Hence, the inside electrolyte is discharged by the dissolved gases and thereby the battery cell is made to fails by the time when the temperature causing the thermal hazard has been reached, thereby ensuring the safety. This scheme is the purpose of the present embodiment and so is different largely from the purpose of the conventional general explosion-proof valve. That is, the conventional explosion-proof valve is opened by pressure of evaporated gases generated by the evaporation of the electrolyte, pressure of flammable gases generated by the dissolution of the separator 112 or the like. On the contrary, in the present embodiment, the narrow-width adhesion portion 43a operates as a safety valve which is broken open by the pressure of the dissolved gases generated by the dissolution of the electrolyte at a temperature before reaching the temperature (about 120 degree Celsius) at which the electrolyte is evaporated and then discharges the electrolyte outward.

As stated above, in the present embodiment, there is provided the battery cell 41 acting as a secondary battery in which the separator 112 for the purpose of insulation is inserted into the portion between the positive-and negative-electrode materials 110, 111 to form an assembled unit and the stacked structure 113 produced by stacking these assembled units, together with the electrolyte, is sealed with the aluminum laminates 42, 42 acting as the laminate external package. In the battery cell 41, there is provided the narrow-width adhesion portion 43a in which the sealing of the aluminum laminates 42, 42 is made to be broken open by the internal pressure due to the dissolved gases of the electrolyte generated by a given overvoltage in charging to discharge the electrolyte outward.

By this means, using internal pressure caused by the resolved gases generated by resolving the electrolyte due to a given overvoltage, the sealing of the aluminum laminates 42, 42 is made to open at an early stage to discharge the electrolyte to the outside of the battery cell 41 and thereby the electrolyte inside the battery cell 41. Hence, the battery cell 41 becomes to have impedance to act as a resistor, permitting the temperature rise due to self-heating inside the battery cell 41 to be curbed. Accordingly, the battery cell 41 can be provided which is made to fail at an early stage of the overvoltage, permitting safety to be ensured.

FIG. 6 is a partially-cutaway plain view showing one end of a secondary battery in a second modification. A battery cell 51 acting as a secondary battery employs the same structure as that of the battery cell 41 shown in FIG. 5 except for a narrow-width adhesion portion 43b.

Though the thermal adhesion portion 43 is formed in a uniform width from the edges of the aluminum laminates 42, 42, only a central portion of an end at the side where the positive and negative electrodes 110a, 111a are not protruded is formed with the narrow-width adhesion portion 43b which is narrowed in width as compared to the other portions and acts as an electrolyte discharging means. The narrow-width adhesion portion 43b is formed by cutting away, in a U-shaped manner, part of the thermal adhesion portion 43 in an edge of the central portion to provide a U-shaped cutout portion 55 after having formed the whole of the thermal adhesion portion 43 in a uniform width from the edges of the aluminum laminates 42, 42,.

With respect to operations and effects of the narrow-width adhesion portion 43b, the same holds true as the narrow-width adhesion portion 43a described in the first modification except for differences in release pressure and an open amount (a leakage of the electrolyte and gases) of the narrow-width adhesion portion 43b.

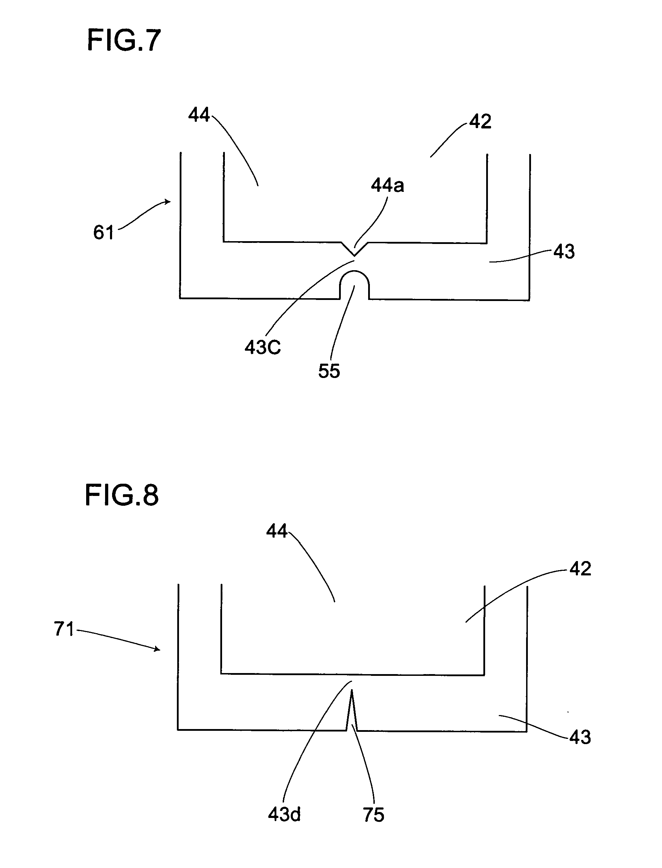

FIG. 7 is a partially-cutaway plain view showing one end of a secondary battery in a third modification. A battery cell 61 acting as a secondary battery employs the same structure as that of the battery cell 41 shown in FIG. 5 except for a narrow-width adhesion portion 43b.

Though the thermal adhesion portion 43 is formed in a uniform width from the edges of the aluminum laminates 42, 42, only a central portion of the end at the side where the positive and negative electrodes 110a, 111a are not protruded is formed with the narrow-width adhesion portion 43c which is narrowed in width as compared to the other portions and acts as an electrolyte discharge means. The narrow-width adhesion portion 43c is formed by cutting away, in a U-shaped manner, part of the thermal adhesion portion 43 in the edge of the central portion to provide a U-shaped cutout portion 55 after having formed the aluminum laminates 42, 42 by the thermal adhesion process so that a triangle pouched portion 44a communicating with the pouched portion 44 protrudes, in a triangular-shaped fashion, from a boundary line between the thermal adhesion portion 43 and the pouched portion 44.

With respect to operations and effects of the narrow-width adhesion portion 43c, approximately the same holds true as the narrow-width adhesion portion 43a described in the first modification except for differences in the release pressure and the open amount of the narrow-width adhesion portion 43c (a leakage of the electrolyte and gases).

FIG. 8 is a partially-cutaway plain view showing one end of a secondary battery in a fourth modification. A battery cell 71 acting as a secondary battery employs the same structure as that of the battery cell 41 shown in FIG. 1 except for a narrow-width adhesion portion 43d.

Though the thermal adhesion portion 43 is formed in a uniform width from the edges of the aluminum laminates 42, 42, only a central portion of the end at the side where the positive and negative electrodes 110a, 111a are not protruded is formed with the narrow-width adhesion portion 43d which is narrowed in width as compared to the other portions and acts as an electrolyte discharge means. The narrow-width adhesion portion 43d is formed by cutting away, in a V-shaped manner, part of the thermal adhesion portion 43 in the edge of the central portion to provide a V-shaped cutout portion 75 after having formed the thermal adhesion portion 43 in a uniform width from the edges of the aluminum laminates 42, 42.

With respect to operations and effects of the narrow-width adhesion portion 43d, approximately the same holds true as the narrow-width adhesion portion 43a described in the first modification except for differences in the release pressure and the open amount of the narrow-width adhesion portion 43d (a leakage of the electrolyte and gases).

In addition, the present invention is not limited to each of the embodiments described above and can be modified within the scope not departing from the gist of the present invention. Obviously, combinations of the structures and the substitutions in each of the embodiments may be possible. Not limiting to a lithium-ion battery pack as the battery pack of the present invention, the present invention is applicable to various battery packs having the same property and the same problems as the lithium-ion battery pack. Further, the deformation-preventive plate 2 is not limited in form, inserting position or the like and therefore the exoergic deformation-preventive plate 2 (a heat dissipating plate) and the thermal insulating deformation-preventive plate 2 (a thermal insulating plate) may be combined. Particularly, when a thermal insulating member with a thermal insulting property is employed as the deformation-preventive plate 2, a battery body can be thermally insulated by a single or by a battery unit, thereby permitting the temperature rise of the battery body to be prevented from extending into other parts. Furthermore, a plurality of battery cells 101 are e.g., sandwiched by two heat dissipating plates to create one unit (a constitutional unit) and when having stacking a plurality of the units, the thermal insulating plates may be inserted into each of the heat dissipating plates.

A secondary battery to which the foregoing modifications can be applied are not limited to a lithium-ion battery and may be any batteries if the batteries are one where its electrolyte is sealed inside a laminate external package and gases are generated at a voltage slightly higher than an overvoltage to be prevented by protection. Further, the narrow-width adhesion portion 43b can be given various variations by forming a non-adhesion portion and cutout portions of the thermal adhesion portion 43 into various shapes to combine the shapes. In the electrolyte discharge means, other than the narrow-width adhesion portion 43b, there are provided superficial scratches in the pouched portion 44 of the aluminum laminates 42, 42 other than the narrow-width adhesion portion 43b and needles are provided to make holes in the aluminum laminates 42, 42 utilizing the expansive force.

## Claims

1. A battery pack comprising an assembled battery body made up by stacking a plurality of battery bodies built up by inserting an insulating separator into a portion between positive- and negative-electrode materials to form an assembled unit and then sealing, by laminate outer packages, a stacked structure produced by stacking this assembled unit, together with an electrolyte, wherein a hard deformation-preventive member is inserted into a portion between said assembled battery body and said battery body and besides there is provided a deformation-preventive means for preventing each battery body from being deformed by pressing the whole of said assembled battery body

2. A battery pack according to claim 1, wherein said deformation-preventive means is a case into which the whole of said battery body is pressed.

3. A battery pack according to claim 1, wherein said deformation-prevention and/or said deformation-preventive means employs an exoergic member excellent in thermal conduction.

4. A battery pack according to claim 1, wherein said deformation-preventive member employs thermal insulating member with thermal insulating property

5. A battery pack according to claim 2, wherein said deformation-preventive member and/or said case employs an exoergic member excellent in thermal conduction.

6. A battery pack according to any one of claim 1 to 5, wherein in said battery body, an electrolyte discharge means is provided which breaks open sealing of an external package by internal pressure due to dissolved gases of said electrolyte generated at an given overvoltage in charging to discharge said electrolyte.

7. A battery pack according to claim 6, wherein said battery body is formed with a pouched portion produced by sticking a given width of an edge of said laminate external package and said electrolyte is sealed in said pouched portion and then said electrolyte discharge means is narrowed locally in a width of the stuck portion of said laminate external package.

8. A battery pack according to claim 6, wherein said battery body is formed with a pouched portion produced by sticking a given width of an edge of said laminate external package and said electrolyte is sealed in said pouched portion and then said electrolyte discharge means is narrowed locally in a width of a stuck portion of said laminate external package to protrude said pouched portion to a side of said edge.

9. A battery pack according to claim 6, wherein said battery body is formed with a pouched portion produced by sticking a given width of an edge of said laminate external package and said electrolyte is sealed in said pouched portion and then a U-shaped portion is cut away from said edge of said stuck portion of said laminate external package in said electrolyte discharge means.

10. A battery pack according to claim 6, wherein said battery body is formed with a pouched portion produced by sticking a given width of an edge of said laminate external package and said electrolyte is sealed in said pouched portion and then a V-shaped portion is cut away from said edge of said stuck portion of said laminate external package in said electrolyte discharge means

11. A battery pack according to claim 6, wherein said battery body is formed with a pouched portion produced by sticking a given width of an edge of said laminate external package and said electrolyte is sealed in said pouched portion and then said electrolyte discharge means is narrowed locally in a width of the stuck portion of said laminate external package to protrude said pouched portion to a side of said edge and besides a U-shaped portion is cut away from said edge of said stuck portion of said laminate external package in said electrolyte discharge means.

12. A battery pack according to claim 10, wherein said battery body is formed with a pouched portion produced by sticking a given width of an edge of said laminate external package and said electrolyte is sealed in said pouched portion and then said electrolyte discharge means is narrowed locally in a width of the stuck portion of said laminate external package to protrude said pouched portion to a side of said edge and besides a U-shaped portion is cut away from said edge of said stuck portion of said laminate external package in said electrolyte discharge means.

## Amended claims

### Amended claims under Art. 19.1 PCT

**1.** (amended) A battery pack comprising an assembled battery body made up by stacking a plurality of battery bodies built up by inserting an insulating separator into a portion between positive- and negative-electrode materials to form an assembled unit and then sealing, by laminate external packages, a stacked structure produced by stacking said assembled unit, together with an electrolyte, wherein a hard deformation-preventive member is inserted into a portion between said assembled battery body and said battery body and besides there is provided a deformation-preventive means for preventing each battery body from being deformed by pressing the whole of said assembled battery body, while said deformation preventive member is made up by employing an exoergic member excellent in thermal conduction for the purpose of dissipating heat inside said battery body

**2.** (amended) A battery pack comprising an assembled battery body made up by stacking a plurality of battery bodies built up by inserting a insulating separator into a portion between positive- and negative-electrode materials to form an assembled unit and then sealing, by laminate external packages, a stacked structure produced by stacking said assembled unit, together with an electrolyte, wherein a hard deformation preventive member is inserted into a portion between said assembled battery body and said battery body and besides there is provided a deformation-preventive means for preventing each battery body from being deformed by pressing the whole of said assembled battery body, while said deformation preventive member is made up by employing an thermal insulating member excellent in thermal insulating property for the purpose of making said battery bodies thermally independent from each other.

**3.** (amended) A battery pack according to claim 1 or 2, wherein said deformation-preventive means is a case into which the whole of said battery body is pressed.

**4.** (amended) A battery pack according to claim 3, wherein said case is made up by employing an exoergic member excellent in thermal conduction.

**5.** (deleted)

**6.** (amended) A battery pack according to any one of claims 1 to 4, wherein there is provided an electrolyte discharge means which breaks open sealing of said laminate external package by internal pressure due to dissolved gases of said electrolyte generated at an given overvoltage in charging to discharge said electrolyte outward.

**7.** A battery pack according to claim 6, said battery body is formed with a pouched portion produced by sticking a given width of an edge of said laminate external package and said electrolyte is sealed in said pouched portion and further said electrolyte discharge means is narrowed locally in a width of the stuck portion of said laminate external package to protrude said pouched portion to a side of said edge.

**8.** A battery pack according to claim 6, said battery body is formed with a pouched portion produced by sticking a given width of an edge of said laminate external package and said electrolyte is sealed in said pouched portion and further said electrolyte discharge means is narrowed locally in a width of the stuck portion of said laminate external package to protrude said pouched portion to a side of said edge.

**9.** A battery pack according to claim 6, wherein said battery body is formed with a pouched portion produced by sticking a given width of an edge of said laminate external package and said electrolyte is sealed in said pouched portion and besides a U-shaped portion is cut away from said edge of said stuck portion of said laminate external package in said electrolyte discharge means.

**10.** A battery pack according to claim 6, wherein said battery body is formed with a pouched portion produced by sticking a given width of an edge of said laminate external package and said electrolyte is sealed in said pouched portion and besides a V-shaped portion is cut away from said edge of said stuck portion of said laminate external package in said electrolyte discharge means.

**11.** A battery pack according to claim 6, wherein said battery body is formed with a pouched portion produced by sticking a given width of an edge of said laminate external package and said electrolyte is sealed in said pouched portion and then said electrolyte discharge means is narrowed locally in a width of the stuck portion of said laminate external package to protrude said pouched portion to a side of said edge and besides a U-shaped portion is cut away from said edge of said stuck portion of said laminate external package in said electrolyte discharge means.

**12.** A battery pack according to claim 10, wherein said battery body is formed with a pouched portion produced by sticking a given width of an edge of said laminate external package and said electrolyte is sealed in said pouched portion and then said electrolyte discharge means is narrowed locally in a width of the stuck portion of said laminate external package to protrude said pouched portion to a side of said edge and besides a U-shaped portion is cut away from said edge of said stuck portion of said laminate external package in said electrolyte discharge means.
